(19) Europäisches Patentamt / European Patent Office / Office européen des brevets

(11) **EP 2 977 934 B1**

(12) **EUROPEAN PATENT SPECIFICATION**

(45) Date of publication and mention
of the grant of the patent:
**21.11.2018 Bulletin 2018/47**

(51) Int Cl.:
*G06K 19/06* (2006.01)     *B60C 13/00* (2006.01)
*G06K 1/12* (2006.01)     *B23K 26/00* (2014.01)
*B29D 30/00* (2006.01)

(21) Application number: **14177901.7**

(22) Date of filing: **21.07.2014**

(54) **Digital coding of rubber articles**

Digitale Codierung von Gummiartikeln

Codage numérique d'articles en caoutchouc

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.01.2016 Bulletin 2016/04**

(73) Proprietor: **4JET Technologies GmbH
52477 Alsdorf (DE)**

(72) Inventor: **Kraus, Armin, Dr.
52134 Herzogenrath (DE)**

(74) Representative: **Dilg, Haeusler, Schindelmann
Patentanwaltsgesellschaft mbH
Leonrodstrasse 58
80636 München (DE)**

(56) References cited:
**WO-A1-2005/000714**     **WO-A1-2009/064580**
**GB-A- 2 307 762**     **NL-C2- 1 006 979**

EP 2 977 934 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

FIELD OF INVENTION

The present invention relates to the field of providing rubber articles with a digital code.

BACKGROUND

EP 1 063 071 A2 discloses a polymer article in particular a tire with a visible surface wherein either a part of the surface is corrugated in such a way that the distance from corrugation ridge to corrugation ridge is between 4 μm and 40 μm or at least a part of the surface is nubbed in such a way that the distance from nub tip to nub tip is between 5 μm and 60 μm.

US 2009/0218019 A1 discloses an article having at least one visible surface, this surface comprising on at least part of it a pattern contrasting with the surface of the article, this pattern comprising a plurality of tufts distributed over the entire said pattern, each tuft having an average cross section between 0.003 and 0.06 mm$^2$. Also disclosed is a moulding process for forming a high-contrast pattern on a surface of an article that can be moulded in a mould, this process consisting in producing, at the position of the pattern on the surface of the mould, a plurality of cavities of average cross section between 0.003 and 0.06 mm$^2$. The pattern gives the article on which it is produced a velvet feel.

From the web site "http://qr.biz/articles/the_michelin_concept_qr_code_tire_meets_the_interests_o f_farmers/" it is known to provide a tire with a QR code by means of velvet technology.

US 2012/0227879 A1 discloses a tire having a visible surface comprising patterns contrasting with said surface, said pattern comprising, over the entire surface thereof, a plurality of tufts distributed with a density of at least five tufts per mm$^2$ or a plurality of blades which are substantially parallel to one another and arranged with a pitch of less than 0.5 mm, each tuft having a mean cross section having a diameter of between 0.03 mm and 0.5 mm or each blade having a mean width of between 0.03 mm and 0.5 mm, characterized in that the walls of the tufts or of the blades have, over at least one quarter of the area thereof, a mean roughness Rz of between 5 μm and 30 μm. The effect of these tufts or blades is to trap the incident light on the surface of the pattern and, by light absorption, to give a black matt appearance to the pattern intended to be produced. Further disclosed is a method of producing molds intended to form the visible imprint of the tires comprising such patterns during vulcanisation.

WO 2005/000714 A1 discloses a method and a system for marking vehicle tires with either human readable data or encoded machine readable data or a combination of both. The data is applied to the exterior surface of the inboard or outboard sidewalls of a tire by laser engraving. A laser applicator or engraver is adjustably mounted at a station by an adjustment mechanism which enables to be moved in the X, Y, and Z planes so that the laser beam can be properly positioned in the X and Y direction for engraving additional data required on the tire. An encoded symbol such as a self clocking glyph code, data matrix or other types of encoded symbology, hereinafter referred to as a 2-D symbol, can be used for subsequent engraving on the sidewall.

WO 2009/064580 A1 provides a method and apparatus for generation of the data matrix barcodes utilizing N/C drilling patterns on machined parts. The machined part may be composed of any material that is capable of being drilled upon. A drill cycle associated with a numerically controlled program defines a pattern of dots to be drilled in a machined part to form a dot pattern. A dot pattern is drilled as a series of partially drilled holes on a surface of the machined part to form a data matrix barcodes mark. A data matrix code conversion converts an inputted alphanumeric data to be encoded onto the machined part into an x-y vector geometry. The x-y vector geometry is used to identify a drilling pattern to generate data matrix barcodes. The x-y vector geometry is converted into x-y vector data for a data matrix grid pattern and used to define a drilling pattern to create the series of dots for a given data matrix barcode in a square rectangular pattern of the data matrix grid using an x and y coordinate (x, y) system.

NL 1006979 C2 discloses a coding device for injection moulded products. Dimples are formed very close together in the product using nipples which can be pushed into or pulled out from the inner wall of the moulding tool.

GB 2 307 762 A discloses a three dimensional (3D) bar coding system comprising inter alia a 3D bar code having bars that are raised with respect to a substrate surface and are of variable width and/or height. The 3D bar code may be produced by printing, embossing, engraving, weaving, knitting, embroidery, screen printing, or stamping.

SUMMARY

In view of the above-described situation, there exists a need for an improved technique that enables to efficiently provide a rubber article with a digital code pattern comprising a plurality of light and dark portions.

This need may be met by the subject matter according to the independent claims. Advantageous embodiments of the herein disclosed subject matter are described by the dependent claims.

According to a first aspect of the herein disclosed subject matter there is provided a method of generating a transfer pattern defining a digital code pattern and being usable to provide a rubber article with the digital code pattern, the method comprising: receiving a digital code pattern definition defining a plurality of light and dark portions, each of such portion having a size A along a predetermined direction; generating the transfer pattern by rasterizing the digital code pattern definition with structure pixels, the rasterizing resulting in an array of structure pixels, wherein along the predetermined direction a size B of a structure pixel follows the relation:

$$B * n = A$$

with n being a natural number equal to or larger than one, $n \geq 1$; the array of structure pixels comprising a number r of different types of structure pixels, wherein r is a natural number greater or equal to two, $r \geq 2$; each type of structure pixel defining a certain surface structure on the rubber article, the surface structure causing a certain optical reflectivity of the structure pixel; the finite number of different types of structure pixels comprising two types of structure pixels having a different optical reflectivity of the respective structure pixels.

This aspect is based on the idea that the quality and in particular the degree of equivalence between transfer pattern and digital code pattern definition of the transfer pattern and hence of the resulting digital code pattern on the rubber article can be improved, if the rasterizing width is chosen such that the size A of the light and dark portions is an integer multiple of the rasterizing width. This may be in particular advantageous if the light and dark portions are formed by relatively few structure pixels.

According to embodiments of the first aspect, the method is adapted for providing the functionality as described by one or more of the herein mentioned aspects or embodiments and/or for providing the functionality as required or as resulting by one or more of the herein mentioned aspects or embodiments, in particular of the embodiments of the second, third, fourth, fifth and sixth aspect.

In contrast to typical rasterizing processes where a given structure is rasterized with a given rasterizing width, according to an embodiment of the first aspect the rasterizing width (size B of the structure pixel) is adapted to the size A of the light and dark portions or the size of the light and dark portions is adapted to the rasterizing width (along a predetermined direction). In this way the quality of the digital code pattern may be improved.

In accordance with an embodiment, carrying out a method according to the first aspect and transferring the obtained transfer pattern to a rubber article results in a rubber article according to a second aspect described below.

According to the second aspect of the herein disclosed subject matter there is provided a rubber article comprising a digital code pattern, the digital code pattern comprising: a plurality of light and dark portions arranged in an array; the plurality of light and dark portions being constituted by an array of structure pixels; the array of structure pixels comprising a number r of different types of structure pixels, wherein r is a natural number greater or equal two, $r \geq 2$; each type of structure pixel defining a (certain) surface structure on the rubber article, the surface structure causing a (certain) optical reflectivity of the structure pixel; each dark portion being constituted by a sub array of the array structure pixels of equal size, each sub array having a same size p x q structure pixels with p and q each being a natural number (i.e. the size of the array is specified in structure pixels).

According to embodiments of the second aspect, the digital code pattern of the rubber article is adapted for providing the functionality as described by one or more of the herein mentioned aspects or embodiments and/or for providing the functionality as required or as resulting by one or more of the herein mentioned aspects or embodiments, in particular of the embodiments of the first, third, fourth, fifth and sixth aspect.

According to a third aspect of the herein disclosed subject matter there is provided a method of providing a rubber article with a digital code pattern, the method comprising: generating in the rubber article a plurality of light and dark portions arranged in an array; the plurality of light and dark portions being constituted by an array of structure pixels; the array of structure pixels comprising a number r of different types of structure pixels, wherein r is a natural number greater or equal two, $r \geq 2$; each type of structure pixel defining a certain surface structure on the rubber article, the surface structure causing a certain optical reflectivity of the structure pixel; each dark portion being constituted by a sub array of the array of structure pixels, each sub array having a same size p x q structure pixels with p and q each being a natural number.

According to embodiments of the third aspect, the method is adapted for providing the functionality as described by one or more of the herein mentioned aspects or embodiments and/or for providing the functionality as required or as resulting by one or more of the herein mentioned aspects or embodiments, in particular of the embodiments of the first, second, fourth, fifth and sixth aspect.

According to a fourth aspect of the herein disclosed subject matter there is provided a marking device for generating a digital code pattern, the marking device comprising: a marking tool; and a controller for (i) controlling the method according to the first aspect or an embodiment thereof; and/or (ii) controlling the method according to the third aspect or an embodiment thereof.

According to embodiments of the fourth aspect, the marking device is adapted for providing the functionality as described by one or more of the herein mentioned aspects or embodiments and/or for providing the functionality as required or as resulting by one or more of the herein mentioned aspects or embodiments, in particular of the embodiments of the first, second, third, fifth and sixth aspect.

According to a fifth aspect of the herein disclosed subject matter there is provided a computer program product in the form of a computer program or in the form of a computer readable medium comprising the computer program, the computer program being configured for, when being executed on a data processor device, controlling the method according to the first aspect or an embodiment thereof.

According to embodiments of the fifth aspect, the method is adapted for providing the functionality as described by one or more of the herein mentioned aspects or embodiments and/or for providing the functionality as required or as resulting by one or more of the herein mentioned aspects or embodiments, in particular of the embodiments of the first, second, third, fourth and sixth aspect.

According to a sixth aspect of the herein disclosed subject matter there is provided a computer program product in the form of a computer program or in the form of a computer readable medium comprising the computer program, the computer program being configured for, when being executed on a data processor device, controlling the method according to the third aspect or and embodiment thereof.

According to embodiments of the sixth aspect, the method is adapted for providing the functionality as described by one or more of the herein mentioned aspects or embodiments and/or for providing the functionality as required or as resulting by one or more of the herein mentioned aspects or embodiments, in particular of the embodiments of the first, second, third, fourth and fifth aspect.

The computer program may be implemented as computer readable instruction code by use of any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The herein disclosed subject matter may be realized by means of a computer program respectively software. However, the herein disclosed subject matter may also be realized by means of one or more specific electronic circuits respectively hardware. Furthermore, the herein disclosed subject matter may also be realized in a hybrid form, i.e. in a combination of software modules and hardware modules.

In the above there have been described and in the following there will be described exemplary embodiments of the subject matter disclosed herein with reference to a method for generating a transfer pattern, a rubber article, a method of providing a rubber article with a digital code pattern, a marking device for generating a digital code pattern, and respective computer program products. It has to be pointed out that of course any combination of features relating to different aspects of the herein disclosed subject matter is also possible. In particular, some features have been or will be described with reference to apparatus type embodiments whereas other features have been or will be described with reference to method type embodiments. However, a person skilled in the art will gather from the above and the following description that, unless otherwise noted, in addition to any combination of features belonging to one aspect also any combination of features relating to different aspects or embodiments, for example even combinations of features of the apparatus type embodiments and features of the method type embodiments are considered to be disclosed with this application.

The aspects and embodiments defined above and further aspects and embodiments of the herein disclosed subject matter are apparent from the examples to be described hereinafter and are explained with reference to the drawings, but to which the invention is not limited.

BRIEF DESCRIPTION OF THE DRAWINGS

Fig. 1 shows a marking device according to embodiments of the herein disclosed subject matter.

Fig. 2 graphically illustrates a digital code pattern definition 104 according to examples useful for understanding the invention of the herein disclosed subject matter.

Fig. 3 illustrates rasterizing of part of the digital code pattern definition 104 by using an array of structure pixels 128, 130 according to examples useful for understanding the invention of the herein disclosed subject matter.

Fig. 4 shows rasterizing of part of the digital code pattern definition 104 by using a comparison array of structure pixels 128, 130 where the size A of light and dark portions 120, 122 is not an integer multiple of the size B of a structure pixel.

Fig. 5 illustrates a method of generating a transfer pattern 110 according to examples useful for understanding the invention of the herein disclosed subject matter.

Fig. 6 shows a rubber article 140 according to examples useful for understanding the invention of the herein disclosed subject matter and in particular a rubber article 140 comprising a digital code pattern 142 defined by the transfer pattern shown in Fig. 5.

Fig. 7 shows a further structure pixel 228 according to embodiments of the herein disclosed subject matter.

Fig. 8 shows a further structure pixel 328 according to embodiments of the herein disclosed subject matter.

Fig. 9 shows a further structure pixel 428 according to embodiments of the herein disclosed subject matter.

Fig. 10 shows a dark portion 122 of a digital code pattern according to embodiments of the herein disclosed subject matter.

Fig. 11 shows part of an array 170 of structure pixels 128, 230, 428 implementing a respective part of the digital code pattern definition 104 of Fig. 2

## DETAILED DESCRIPTION

The illustration in the drawings is schematic. It is noted that in different figures, similar or identical elements are provided with the same reference signs or with reference signs which are different from the corresponding reference signs only within the first digit or an appended character.

Accordingly, the description of similar or identical features is not repeated in the description of subsequent figures in order to avoid unnecessary repetitions. However, it should be understood that the description of these features in the preceding figures is also valid for the subsequent figures unless noted otherwise.

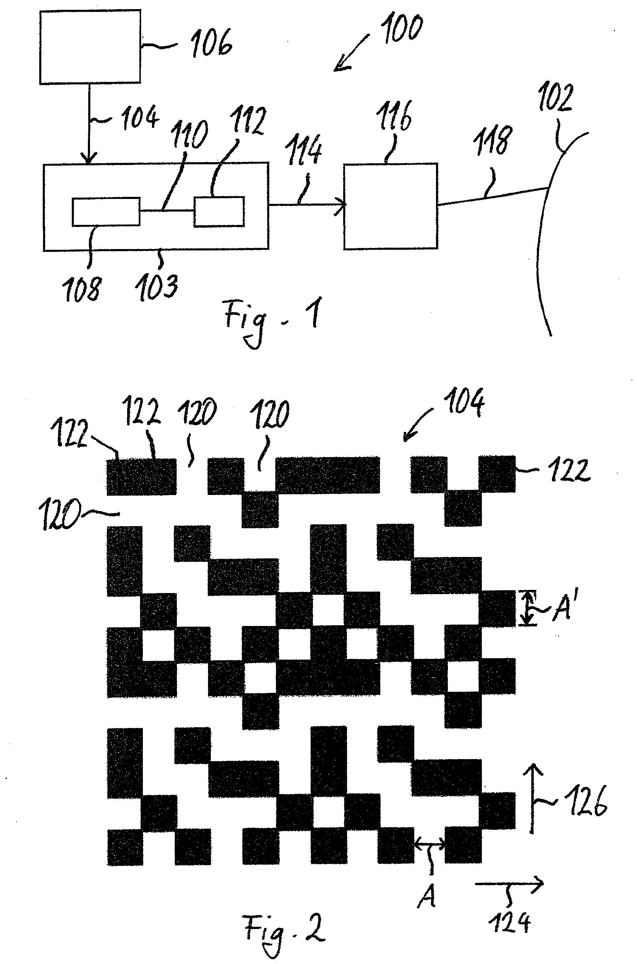

Fig. 1 shows a marking device 100 according to embodiments of the herein disclosed subject matter.

The marking device 100 comprises a marking tool 116, e.g. a laser, capable of modifying a surface of a target 102, e.g. a rubber article in the form of a tire. According to another embodiment, the target may be a mold in which a rubber article is manufactured. Directly modifying the surface of the rubber article has the advantage that the tire can be provided with an individual digital code. According to an embodiment, the surface modified by the marking tool 116 is a cured polymer material which the rubber article comprises or of which the rubber article exists.

In accordance with an embodiment, the marking device 100 comprises a controller 103 for controlling (e.g. carrying out) one or more methods according to the herein disclosed subject matter. According to an embodiment, the controller 103 is adapted for receiving a digital code pattern definition 104, e.g. a QR code definition, from a source 106, e.g. a QR code generator. According to a further embodiment the controller 103 is configured for controlling a method of generating a transfer pattern according to a first aspect of the herein disclosed subject matter. To this end, the controller 103 comprises a transfer pattern generation unit 108 which is configured for receiving the digital code pattern definition 104 and generating, and response hereto, a transfer pattern 110 according to embodiments of the herein disclosed subject matter. According to a further embodiment, the controller 103 comprises a tool control unit 112 which is configured for receiving the transfer pattern 110 and generating, in response hereto, control signals 114 for the marking tool 116. The marking tool 116 is configured for modifying a surface of the target 102 in response to the control signals 114, thereby generating on the target 102 a representation of the digital code pattern which is defined by the digital code pattern definition 104. The type of the representation of the digital code pattern depends on the target 102. For example, if the target 102 is a tire, the representation of the digital code pattern is the digital code pattern itself, i.e. the digital code pattern that is readable by a suitable code reader such as a smart phone with a QR reader application. In another embodiment, if the target 102 is a mold for rubber article (e.g. tire) manufacturing, the representation of the digital code pattern is an inverse of the digital code pattern which, when a rubber article is manufactured in the mold, generates the digital code pattern in the rubber article. In accordance with an embodiment, the marking tool 116 comprises a laser which in response to the control signals generates a laser beam 118 which in turn generates the representation of the digital code pattern on the target 102. According to an embodiment, the marking tool 116 comprises an optical setup comprising mirrors and/or lenses by which the laser beam 118 is shaped and/or focused. For generating the digital code pattern, the laser beam 118 and the target 102 are moved with respect to each other, e.g. by moving the laser beam 118 by means of the optical setup, by moving the target 102, or a combination thereof, i.e. by moving the laser beam 118 and the target 102.

According to respective embodiments, the generation of the digital code pattern on the target 102 is performed according to one or more embodiments disclosed in the European patent application No. 14 154 445.2, filed on February 10, 2014 by the applicant of this patent application.

Fig. 2 graphically illustrates a digital code pattern definition 104 according to embodiments of the herein disclosed subject matter.

In accordance with an example useful for understanding the invention, the digital code pattern definition 104 defines of a plurality of light portions (some of which are indicated at 120 in Fig. 2) and dark portions (some of which are indicated at 122 in Fig. 2), each of such portion 120, 122 having a size A along a predetermined direction, e.g. along a first direction 124. In accordance with an example, the light and dark portions 120, 122 form an array, e.g. a rectangular array. In accordance with a further embodiment, each of the light portions 120 and the dark portions 122 have a size A' along a second direction 126. According to an example, the size of the light portions 120 and the dark portions 122 is identical in both directions A, A', i.e. A = A' and hence the light portions 120 and the dark portions 122 are squares in this example, as shown in Fig. 2. According to other examples, the light portions 120 and the dark portions 122 have a different shape and may e.g. be rectangles, or lozenges arranged along two linearly independent (first and second) directions. In accordance with an example, the first direction 124 and the second direction 126 are linearly independent and define in particular the main directions (directions of rows and columns) of the digital code pattern definition. In accordance with an example, the first direction 124 is parallel to the rows of the array of light and dark portions and the second direction 126 is parallel to the columns of the array of light and dark portions.

It should be understood that the digital code pattern and its definition referred to in the drawings is only an exemplary simple implementation of a digital code pattern provided for illustrative purposes. According to examples, not shown in the drawings, the digital code pattern is a QR code pattern of any suitable type, e.g. of a type defined by Denso Corporation (see e.g. www.qrcode.com).

The digital code pattern definition 104 defines an ideal code pattern. In accordance with an embodiment, generating a representation of the digital code pattern definition 104 on the target 102, e.g. the tire, requires rasterizing of the digital code pattern definition 104. In accordance with an embodiment, rasterizing the digital code pattern definition 104 is performed with structure pixels, the rasterizing thereby resulting in an array of structure pixels.

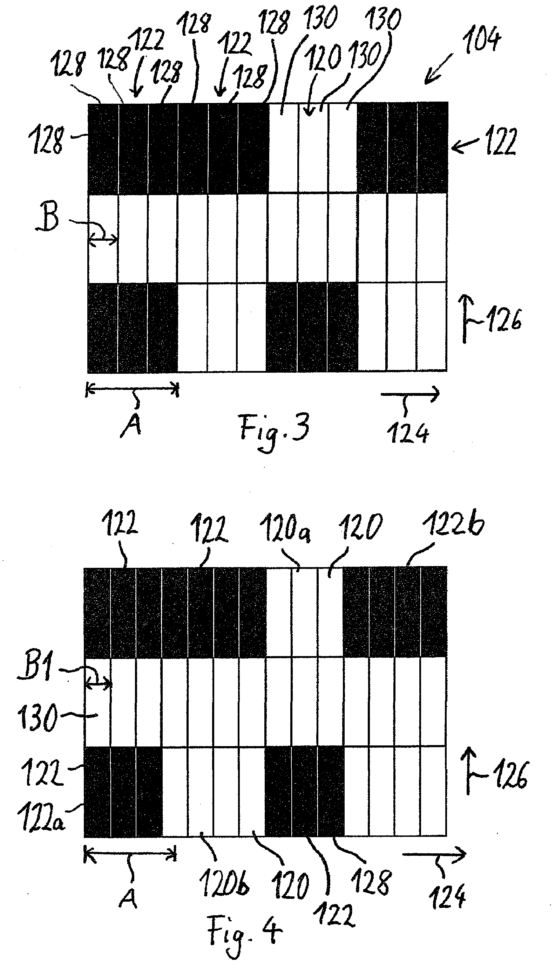

Fig. 3 illustrates rasterizing of part of the digital code pattern definition 104 by using an array of structure pixels 128, 130 according to examples of the herein disclosed subject matter.

The size B of the structure pixels 128, 130 along a predetermined direction (e.g. along the first direction 124) corresponds to the rasterizing width in the predetermined direction. In other words, by rasterizing the digital code pattern definition 104 the ideal code pattern defined by the digital code pattern definition 104 is mapped to an array of structure pixels 128, 130, wherein all structure pixels 128, 130 have equal size. Rasterizing can be performed with different rasterizing widths in different directions (e.g. in the first and second directions 124, 126). For example, the rasterizing width is one third of the size A of the light and dark portions 120, 122 in the first direction 124 and in the second direction 126 the rasterizing width is identical with the size A of the light and dark portions 120, 122, as shown in Fig. 3.

Since the rasterizing is performed with the structure pixels 128, 130 (or, worded differently, the rasterizing is performed by mapping the digital code pattern definition 104 into an array of structure pixels 128, 130) the rasterizing width in a certain direction (e.g. first or second direction) corresponds to the width of the structure pixels 128, 130 in this certain direction. Hence, rasterizing with different rasterizing widths in the first and second direction 124, 126 corresponds to the structure pixels 128, 130 which deviate from a square shape. Generally, the structure pixels 128, 130 may have any shape suitable for a rasterizing the digital code pattern definition 104.

For example, the structure pixels have a rectangular shape (different from a square), as shown in Fig. 3.

In accordance with an embodiment, irrespective of the shape and the dimensions of the structure pixels 128, 130, which is the same for all structure pixels, the array of structure pixels 128, 130 comprises a number r of different types of structure pixels, wherein r is a natural number greater or equal to two, $r \geq 2$. Each type of structure pixel defines a certain surface structure on the rubber article, the surface structure causing a certain optical reflectivity of the structure pixel. In accordance with an embodiment, the number r of different types of structure pixels 128, 130 comprise two types of structure pixels having a different optical reflectivity of the respective structure pixels 128, 130. For example, according to an embodiment, the array of structure pixels 128, 130 consists of two different types of structure pixels, a dark type of structure pixel 128 (having low reflectivity) and a light type of structure pixel 130 (having high reflectivity). In this regard it is noted that no surface structure is shown in Fig. 3, rather, the different types of structure pixels are marked with different colors (black and white).

In accordance with an embodiment, the term "optical reflectivity" includes a reflectivity for at least one of e.g. infrared radiation, visible light, ultraviolet radiation.

According to a further embodiment, a method of generating a transfer pattern comprises for generating the transfer pattern by rasterizing the digital code pattern definition by using an array of structure pixels. According to an embodiment, this is performed by a respectively configured controller, e.g. the controller 103 described with regard to Fig. 1.

Along a predetermined direction, e.g. the first direction 124, each structure pixel has a size B. In accordance with an embodiment, along the predetermined direction the size B of a structure pixel follows the relation:

$$B * n = A \qquad (Eq. 1)$$

with n being a natural number equal to or larger than one, $n \geq 1$, e.g. n = 3 (in the first direction 124). In other words, if the digital code pattern definition defines the plurality of light and dark portions 120, 122 as having a size A along the predetermined direction, the rasterizing width and hence the size B of a structure pixel along the predetermined the direction is determined the such that the size A of light and dark portions 120, 122 is an integer multiple of the size B of a structure pixel. This results in light and the dark portions 120, 122 which all have the same number of structure pixels. Hence, since all structure pixels have the same size, the above condition (Eq. 1) leads to light and the dark portions 120, 122 which all have the same size. This in turn results in an improved quality of the digital code pattern produced on the target 102 compared to a case where the size of light and dark portions differ over the digital code pattern generated on the target. According to an embodiment, n is in the inter-

val $1 \leq n \leq 7$. According to a further embodiment, n is in the interval $1 \leq n \leq 5$. According to a further embodiment, n is in the interval $1 \leq n \leq 3$. It is noted that in particular when the dark portions 122 are generated by a laser beam, a small value of n may be advantageous since in such a case a larger beam diameter may be used and a sufficient depth of focus is easier achieved with a larger laser beam (beam of larger diameter).

In accordance with respective embodiments, either the rasterizing width in the first direction 124 (and hence the size B of a structure pixel, as described above) or the size A of the light and dark portions 120, 122, or, in still another embodiment both, A and B1 is chosen such that (Eq. 1) is fulfilled. According to an embodiment, the rasterizing width (B1) is a constant of the marking tool 116 and/or the controller 103 (see Fig. 1) and hence the size A of the light and dark portions 120, 122 is adjusted to fulfill (Eq. 1).

Fig. 4 shows rasterizing of part of the digital code pattern definition 104 by using a comparison array of structure pixels 128, 130 where the size A of light and dark portions 120, 122 is not an integer multiple of the size B1 of a structure pixel.

In particular, different from equation (Eq. 1), in Fig. 4 the rasterizing width in the first direction 124 (and hence the size B1 of a structure pixel) or the size A of the light and dark portions 120, 122, or both, A and B1 is chosen such that two portions 120, 122 are mapped onto seven structure pixels in the first direction 124. Hence, because the structure pixel defines the resolution of the rasterizing process and is hence the smallest entity that can be of e.g. the first type or a second type (i.e. the structure pixel itself is of one type for the whole structure pixel) the light and dark portions 120, 122 are of different size in the first direction 124. In particular, in the example illustrated in Fig. 4, the dark portions 122 are constituted either of three structure pixels 128 (the respective dark portions referred to as 122a in Fig. 4) or of four structure pixels 128 (the respective dark portions are referred to as 122b in Fig. 4). Likewise, in the example illustrated in Fig. 4, the light portions 120 are constituted either of three structure pixels 130 (the respective light portions are referred to as 120a in Fig. 4) or of four structure pixels 130 (the respective light portions referred to as 120b in Fig. 4). It is noted, that in the second direction 126 the size of the structure pixels 128, 130 is equal to the size A of the light and the dark portions 120, 122 in the second direction (as in Fig. 3).

While in the foregoing the rasterizing concept according to embodiments of the herein disclosed subject matter has been described, in the following reference is made to the surface structure of individual structure pixels.

In accordance with an embodiment, the array of structure pixels 128, 130 comprises a number r of different types of structure pixels, wherein r is a natural number greater or equal two, $r \geq 2$. Further, each type of structure pixel defines a certain surface structure on the rubber article, the surface structure causing a certain optical reflectivity of the structure pixel and the r different types of structure pixels comprise two types of structure pixels having a different optical reflectivity of the respective structure pixels. For example, (e.g. in case the number of types of structure pixels is two (r = 2)) a first type of structure pixel 128 has a first optical reflectivity and a second type of structure pixel 130 has a second optical reflectivity which is higher than the first optical reflectivity.

In accordance with an embodiment, the second type of structure pixel 130 with the higher, second reflectivity has a plain surface, i.e. the surface structure of the second type of structure pixel 130 is plain. In contrast, according to an embodiment the first type of structure pixel 128 differs from a plain surface.

In accordance with an embodiment, each surface structure defines a height profile and at least a first type (e.g. the structure pixels with low reflectivity) out of the different types of structure pixels has, along a further direction, a characteristic structure element size C that follows the relation

$$C * f = B \qquad (Eq.\ 2)$$

wherein the factor f is in the interval $0.5 \leq f \leq 8$, and C is defined as the largest lateral dimension of the surface structure along the further direction at a mean height of the height profile. According to an embodiment, the further direction is the predetermined direction. It is noted, that for $f \leq 1$ the largest lateral dimension C of the surface structure along the further direction at a mean height of the height profile is larger than the size of the structure pixel in the first direction. In this way it might be taken into account that part of the surface structure does not substantially change the reflectivity of the structure pixel. According to other embodiments, the factor f is in the interval $0.9 \leq f \leq 5$. According to a further embodiment, the factor f is larger than or equal to one ($f \geq 1$), e.g. $f \geq 1.3$ or $f \geq 1.5$. According to a further embodiment, the factor f is smaller than or equal to four ($f \leq 4$), e.g. smaller than or equal to three ($f \leq 3$) or even smaller than or equal to two ($f \leq 2$).

The surface structure may be of any appropriate type, e.g. of a type described below. It should be understood that the rasterizing process according to embodiments of the herein disclosed subject matter results in a particular size of structure pixels wherein the surface structure of the individual structure pixels may be defined independently, thereby finally defining the entire surface structure which is the transferred to the rubber article and which defines the digital code pattern on the rubber article.

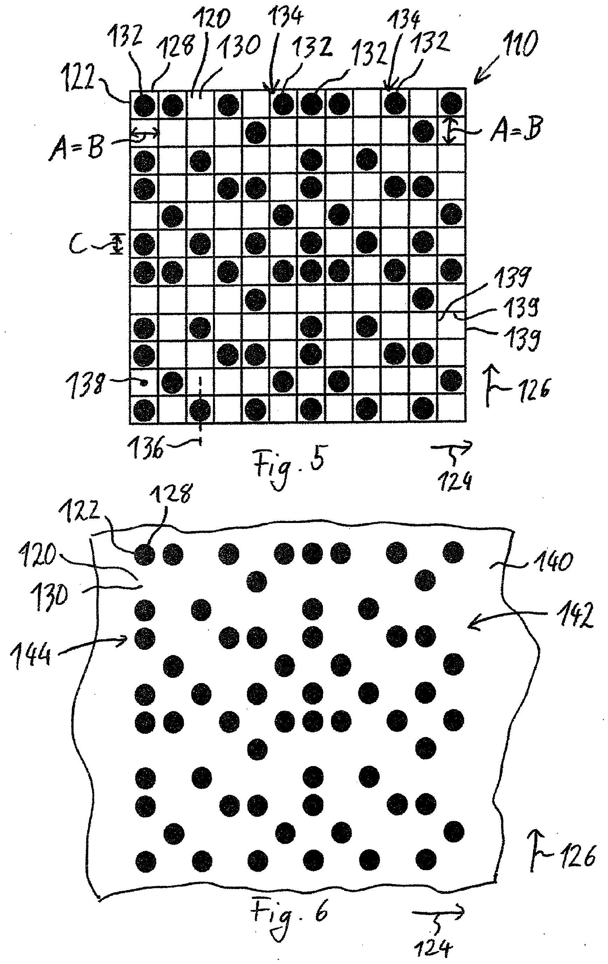

Fig. 5 illustrates a method of generating a transfer pattern 110 according to examples of the herein disclosed subject matter. In particular, Fig. 5 shows an array of structure pixels 128, 130 which are generated by rasterizing the digital code pattern definition 104 of Fig. 2. In accordance with an example, each dark portion 122 consists of a single structure pixel 128. In accordance with an embodiment, each light portion 120 consists of a single structure pixel 130. Hence, the size B of the structure pixels 128, 130 in the first direction 124 and the second the direction 126 is equal to the respective size A of the light and dark portions 120, 122 of the digital code pattern definition 104.

Further schematically shown in Fig. 5 is the surface structure of the different types of structure pixels 128, 130. According to an example, each structure pixel 128 of a first type of structure pixel has a single structure element, some of which are indicated at 132 in Fig. 5. Hence, in accordance with an embodiment, a surface structure 134 of the structure pixels 128 consists of the structure element 132. For example, the single structure element (per structure pixel) is a single hole e.g. with circular cross section. In accordance with respective examples, the structure element 132 may have a simple geometric shape and may e.g. be a hole, a protrusion, a ridge, a slot (trench), etc. Exemplarily shown in Fig. 5 is a structure element 132 in the form of a hole with circular cross section.

In accordance with an example, the array of structure pixels 128, 130 comprises a structure pixel type 128 with a surface structure 134 having a center of gravity which is within a distance of less than E * B from a geometrical center of the pixel, wherein E is e.g. 0.2, 0.15 or 0.1, as shown in Fig. 5.

Further in accordance with an embodiment, the array of structure pixels 128, 130 further comprises a type of structure pixel 128 with a surface structure 134 that is symmetrically distributed over the structure pixel 128, as shown in Fig. 5. According to an embodiment, a symmetrically distributed surface structure is defined as a surface structure 134 being, in a plane of the digital code pattern, symmetrical with respect to a straight line 136 that is within a distance of less than 0,2 * B from a geometrical center of the structure pixel 128. The geometrical center of a structure pixel 130 is indicated at 138 in Fig. 5. It should be understood still that the geometrical center of the structure pixels 128 is at the same position with regard to the structure pixel 128 as it is for the structure pixel 130 with regard to the structure pixel 130.

In accordance with an embodiment the first type of structure pixels 128 has, along a further direction (e.g. along the first direction 124 and along the second direction 126), a characteristic structure element size C that follows the relation of (Eq. 2),

$$C * f = B$$

wherein the factor f is in the interval $0,5 \leq f \leq 8$, and C is defined as the largest lateral dimension of the surface structure along the further direction at a mean height of the height profile (which in Fig. 5 is formed by the structure element 132 in the form of a hole).

It should be understood that the boundaries 139 of the structure pixels 128, 130 are shown in Fig. 5 for illustrative purposes, in particular for illustrating the rasterizing process and hence the generation of the transfer pattern 110. However, these boundaries 139 need not necessarily be included in the transfer pattern 110 generated according to embodiments of the herein disclosed subject matter. Further it should be understood that while Fig. 5 shows a graphical representation of the transfer pattern 110, the transfer pattern 110 may be provided in any suitable representation, in particular in any suitable machine readable representation.

Fig. 6 shows a rubber article 140 according to examples of the herein disclosed subject matter and in particular a rubber article 140 comprising a digital code pattern 142 defined by the transfer pattern 110 shown in Fig. 5.

In accordance with an example and according to the transfer pattern 110 of Fig. 5, the digital code pattern 142 comprises a plurality of light and dark portions arranged in an array, e.g. a rectangular array or even a square array. According to an embodiment, the array defines a first direction 124 and a second direction 126 perpendicular to the first direction 124.

In accordance with an example, the plurality of light and dark portions is constituted by an array of structure pixels 128, 130 as defined by the transfer pattern 110 of Fig. 5. As the details of the transfer pattern 110 has been already described with regard to Fig. 5, these details are not repeated here. In effect, as defined by a transfer pattern according to embodiments of the herein disclosed subject matter, the array of structure pixels 128, 130 on the rubber article 140 comprises a number r of different types of structure pixels, wherein r is a natural number greater or equal two. In accordance with the transfer pattern 110 shown in Fig. 5, the number of different structure pixels is two (r = 2) in Fig. 6. Further in accordance with an embodiment, each dark portion 122 is constituted by a sub array 144 of the array structure pixels 128, 130. In accordance with an embodiment, each sub array 144 of structure pixels has the same size p x q with p and q each being a natural number. In accordance with an embodiment, p and q are each equal to or larger than one, $p \geq 1$ and $q \geq 1$ and smaller than or equal to five, $p \leq 5$ and $q \leq 5$. In accordance with an embodiment, p = q and in particular p = q = 1, as shown in Fig. 6. According to a further embodiment, $p \leq 3$ and $q \leq 3$ or even $p \leq 2$ and $q \leq 2$. Small values for p and q have the advantage that the structure pixels are large and hence the structure elements may be relatively large. This may allow the use of a carbon dioxide laser for generating the structure elements. Further, large structure elements may allow for a cost efficient and fast generation of the digital code pattern with a laser beam (e.g. a beam of a carbon dioxide laser).

According to an embodiment, the digital code pattern 142 identifies the rubber article 140, in particular within a fabrication batch of rubber articles or as belonging to a particular fabrication batch. According to other embodiments, a different identification may be provided by the digital code pattern 142, e.g. an identification within a weekly production (e.g. within tires having the same DOT code and/or tires manufactured in a specific curing mold (curing batch)), within a monthly production or within an annual production, etc. According to a further embodiment, the digital code pattern individually identifies each rubber product, e.g. within in a batch. According to a further embodiment, the digital code pattern identifies the rubber article as belonging to a subset of a batch (e.g. a curing batch). For example, according to an embodiment, the digital code pattern identifies the rubber article as belonging to a subset of a batch wherein the subset has been equipped with specific properties (such as an emergency operation property of a tire which causes small defects in the tire to be repaired automatically by a suitable inner layer in the tire).

Identification of the rubber article 140 by the digital code pattern 142 is enabled e.g. by any process that generates the digital code pattern 142 individually in each individual rubber article 140, e.g. by irradiation of a cured polymer material of the rubber article 140 with a laser beam.

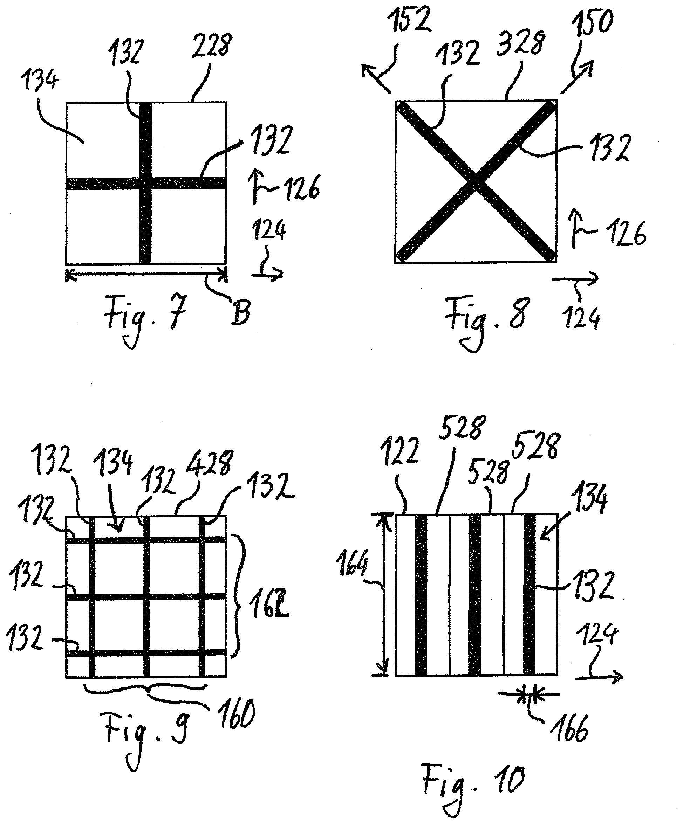

Fig. 7 shows a further structure pixel 228 according to embodiments of the herein disclosed subject matter.

In accordance with an embodiment, the structure pixel 228 of Fig. 7 has exactly two structure elements 132. In accordance with a further embodiment, the two structure elements 132 are crossing trenches forming a respective surface structure 134 of the structure pixel 228. In particular, the trenches define a respective height profile of the surface structure 134 of the structure pixel 228. In Fig. 7, the height is coded by the color where in accordance with an embodiment the height profile of the structure pixel 228 comprises plain surfaces at a first height (shown in white) and, depressed with regard to the first height, a surface at a second height (shown in black) formed by the trenches 132.

Trenches can efficiently be formed by irradiating the surface of a rubber article with a laser beam. In accordance with an embodiment, the structure pixel 228 of Fig. 7 has a size B along the first direction 124 which is equal to the size A of a dark portion 122 of the digital code pattern definition 104 (see e.g. Fig. 2). In accordance with an embodiment, the structure elements 132 have their largest extent in the first direction 124 and in the second direction 126, respectively.

According to another embodiment, instead of trenches the structure elements 132 are provided in the form of ridges which may be formed e.g. by removal of material adjacent to the region where the ridge is to be formed.

Fig. 8 shows a further structure pixel 328 according to embodiments of the herein disclosed subject matter. The structure pixel 328 shown in Fig. 8 is similar to the structure pixel 228 of Fig. 7 with the exception that the crossing structure elements 132 have its largest extent in a third direction 150, forming an acute angle (e.g. 45 degrees) with the first direction 124, and a fourth direction 152, forming an acute angle (e.g. 45 degrees) with the second direction 126.

Fig. 9 shows a further structure pixel 428 according to embodiments of the herein disclosed subject matter. In accordance with an embodiment, the surface structure of the structure pixel 428 of Fig. 9 comprises six structure elements 132. In accordance with a further embodiment, the surface structure 134 of the structure pixel 428 comprising at least two (e.g. three) structure elements 132 which extends in parallel. In accordance with an embodiment, the surface structure 134 comprises two sets 160, 162 of structure elements 132 which are oriented transverse (e.g. under an angle of 90 degrees, as shown in Fig. 9) with respect to each other, wherein optionally each set of structure elements comprises at least two (e.g. three) structure elements 132 which extends in parallel. According to an embodiment, the two sets of structure elements which are oriented transverse with respect to each other are crossing each other, as shown in Fig. 9.

Fig. 10 shows a dark portion 122 of a digital code pattern according to embodiments of the herein disclosed subject matter. The dark portion 122 comprises a structure pixel 528 according to embodiments of the herein disclosed subject matter. In accordance with an embodiment, the surface structure 134 of the structure pixel 528 comprises a single structure element 132. In accordance with an embodiment, the structure element 132 has a largest extent 164 and a transverse extent 166 which is smaller than the largest extent 164, e.g. by a factor of at least two or more. For example, in accordance with an embodiment, the structure element 132 is a trench or a ridge, e.g. of the type described with regard to Fig. 7, Fig. 8 and Fig. 9.

In accordance with an embodiment, the dark portion 122 of a digital code pattern is constituted by a sub array of structure pixels of size p x q, e.g. of the size 1 x 3, as shown in Fig. 10. Accordingly, the dark portion 122 shown in Fig. 10 comprises three structure pixels 528. In this regard it is noted, that the dark portion 122 shown in Fig. 10 is a possible implementation of the dark portion 122 of the transfer pattern shown in part in Fig. 3.

According to an embodiment, a characteristic structure element size C along the predetermined direction (i.e. in the present embodiment in the first direction 124) is within 100 $\mu$m and 400 $\mu$m, wherein the characteristic structure element size C is defined as the largest lateral dimension of the surface structure along the predetermined (first) direction 124 at a mean height of the height profile. According to an embodiment, the mean height of the height profile of a structure pixel along the predetermined direction is calculated from the arithmetic mean of a surface contour over the structure pixel along the predetermined direction 124.

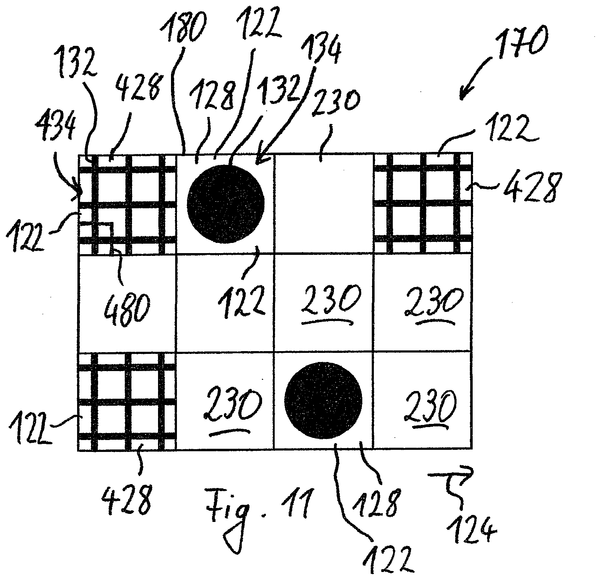

Fig. 11 shows part of an array 170 of structure pixels 128, 230, 428 implementing a respective part of the digital code pattern definition 104 of Fig. 2

In accordance with an embodiment, the array 170 of structure pixels comprises three types of structure pixels 128, 230, 428, wherein two different types of structure pixels 128, 428 have a lower optical reflectivity than the third type of structure pixel 230 by which the light portions are implemented. In particular, in accordance with an embodiment the structure pixels 230, by which the light portions are implemented, have a plain surface structure (no structured surface), as shown in Fig. 11. In accordance with an embodiment, two or more (e.g. tool) different type of structure pixels 128, 428 a provided for implementing the dark portions. In accordance with an embodiment, the at least two different types of structure pixels 128, 428, implementing the dark portions, have different granularity, i.e. a different degree of coarseness of the surface structure. For example, in accordance with an embodiment, a first type of structure pixels 128 comprises only a single structure element 132 in the form of a hole (e.g. as described with regard to Fig. 6) whereas a second type of structure pixel 428 comprises six structure elements 132 in the form of crossing trenches (e.g. as described with regard to Fig. 9).

In accordance with an embodiment, for a given surface structure 134, 434 of a dark portion 122 a potential structure pixel is defined as the smallest sub structure 180, 480 by which the surface structure 134, 434 can be reproduced by filling the dark portion 122 without gaps with the sub structure 180, 480. Hence, when starting from a first sub structure 480 in a dark portion 122 any second sub structure 480 in the same dark portion 122 can be brought into registration with the first sub structure 480 by only translatory displacement of the second sub structure 480. If different surface structures 134, 434 for implementing a dark portion (recognizable by a low reflectivity) are present on the rubber article, the rasterization width along the predetermined direction (e.g. along the first direction 124) is then given by the smallest common divisor by which the dark portion 122 can be divided into the respective sub structures. For example, shown in Fig. 11 is a sub structure 480 which is a smallest sub structure of the respective dark portion 122 in the above mentioned sense because the surface structure 434 can be reproduced by filling the dark portion 122 with the sub structure 480. In particular, as can be taken from Fig. 11, the dark portion 122 can be divided into three parts along the predetermined direction 124 and hence the divisor for the surface structure 434 is three in the predetermined direction 124. The surface structure 134 cannot be divided into sub structures and hence, the divisor for the surface structure 134 is one in the predetermined direction 124. Hence the smallest common divisor D of the surface structures 134, 434 is one and hence the rasterization width (= size B of the structure pixel) in the predetermined direction is B = A. It is noted that the rasterization width is the same for the whole digital code pattern.

It is noted that generally the rasterization width along the predetermined direction (which is equal to the size B of a structure pixel in the predetermined direction) is equal to the size A of a dark portion along the predetermined direction divided by the smallest common divisor D of all surface structures of the digital code pattern (or in another embodiment, of all surface structures forming dark portions of the digital code pattern).

In short:

$$B = A / D \qquad (Eq.\ 3)$$

(all quantities A, B, D measured in the predetermined direction). From comparing (Eq. 3) with (Eq. 1), it can be taken that by determining the smallest common divisor D also the factor n of (Eq. 1) is determined (D = n).

Finally it is noted that although some embodiments refer to a tire etc., it should be understood that each of these references is considered to implicitly disclose a respective reference to the general term "rubber article" and vice versa. Also other terms which relate to a specific entity (e.g. to a laser) are considered to implicitly disclose the respective general term with the specified functionality.

According to embodiments of the invention, any suitable entity (e.g. components, units and devices) disclosed herein, e.g. the controller 103, are at least in part provided in the form of respective computer programs which enable a (data) processor device to provide the functionality of the respective entities as disclosed herein. According to an embodiment, the controller 103 comprises such a processor device. According to other embodiments, any suitable entity disclosed herein may be provided in hardware. According to other - hybrid - embodiments, some entities may be provided in software while other entities are provided in hardware.

It should be noted that any entity disclosed herein (e.g. components, units and devices such as the controller, the marking tool, etc) are not limited to a dedicated entity as described in some embodiments. Rather, the herein disclosed subject matter may be implemented in various ways and with various granularity on device level or, where applicable, on software module level while still providing the specified functionality.

Further, it should be noted that according to embodiments a separate entity (part, portion, surface, component, unit, structure or device) may be provided for each of the functions disclosed herein. According to other embodiments, an entity (part, portion, surface, component, unit, structure or device) is configured for providing two or more functions as disclosed herein. According to still other embodiments, two or more entities (e.g. part, portion, surface, component, unit, structure or device) are configured for providing together a function as disclosed herein. According to a further embodiment, any direction, distance, distribution, etc. defined herein is defined with respect to a plane spanned by the digital code pattern (e.g. the digital code pattern on the rubber article, when reference is made to the rubber article).

According to an embodiment, the controller comprises a processor device including at least one processor for carrying out at least one computer program corresponding to a respective software module.

It should be noted that the term "comprising" does not exclude other elements or steps and the "a" or "an" does not exclude a plurality. Hence, according to an embodiment the term "comprising" stands for "comprising inter alia". According to further embodiment, the term "comprising" stands for "consisting of". Also elements described in association with different embodiments may be combined. It should also be noted that reference signs in the claims should not be construed as limiting the scope of the claims. It should also be noted that reference signs in the description and the reference of the description to the drawings should not be construed as limiting the scope of the description. Rather, the drawings only illustrate an exemplary implementation of the described embodiments.

Further, it should be noted that while the examples in the drawings include a particular combination of several embodiments of the herein disclosed subject matter, any other combination of embodiment is also possible and is considered to be disclosed with this application.

Having regard to possible applications it is noted that in some applications, the use of digital code patterns with relatively small size may be desirable, e.g. when providing a low profile tire with a digital code pattern in the form of a QR code (e.g. with dimensions of the digital code pattern of about 1 to 1.5 $cm^2$).

This implies a size of the light and dark portions of the digital code pattern of about 300 $\mu$m to 750 $\mu$m, depending on the number of light and dark portions.

On the other hand it may be desirable to use large structure elements (and hence large structure pixels) since smaller structure elements may be more difficult to produce, depending on the method of fabrication (e.g. if a laser is used). For example, when using laser radiation for generating the digital code pattern the smallest possible dimension of a hole or a trench is limited by the theoretical spot size of the laser (e.g. the so-called $1/e^2$ spot size if a Gauss beam is used) as well as by the power per unit area of the laser beam (it has to be considered which regions of the spot indeed lead to a removal of material of the target, e.g. the rubber article). If small structure elements shall be obtained, the spot size has to be reduced and/or the power of the laser radiation has to be reduced, both leading to an increase of fabrication time for generating the digital code pattern on the target. Additionally, a smaller minimum spot size (increased focusing) leads to a smaller Rayleigh length (= length in the beam direction, in which the size of the laser spot is doubled compared to the minimum spot size of the laser beam). Hence, a small minimum spot size limits the working range for the laser beam on curved surfaces of the target (e.g. of the rubber article) or surfaces of the target which are not perpendicular to the laser beam. For example, for a carbon dioxide ($CO_2$) laser with a minimum spot size of 180 $\mu$m and a realistic optical system a Rayleigh length of only about 2 mm is achievable. Since only approximately half of the Rayleigh length can be used for structuring the surface of the target, a digital code of size 2 x 2 $cm^2$ can be manufactured only under an angle (i.e. a deviation from a direction perpendicular to the surface of the target) of 10 degrees or less (if there are no tolerances regarding position of the target and the adjustment of the laser with respect to the target). This increases the costs of the whole process. A further reduction of the minimum spot size is hardly achievable with carbon dioxide lasers. On the other hand, with a minimum spot size of 320 $\mu$m the Rayleigh length is about 6.5 mm which is a size convenient to work with. If a YAG laser (having a wavelength which is shorter by a factor of ten (10) compared to the wavelength of the carbon dioxide laser) is used, a better ratio of minimum spot size to Rayleigh length is achievable. For example, for an acceptable Rayleigh length of 6.5 mm a minimum spot size of 100 $\mu$m is achievable with a YAG laser. Nevertheless, due to the higher threat of this a laser type the expenses for security systems as well as the costs of the laser itself is increased compared to the carbon dioxide laser.

In order to recapitulate some of the above described embodiments of the present invention one can state:

Described is in particular a method of generating a transfer pattern defining a digital code pattern. According to the described method, a digital code pattern definition defining a plurality of light and dark portions is received, wherein each of such portion has a size A. The transfer pattern is generated by rasterizing the digital code pattern definition with structure pixels, in particular by mapping the digital code pattern definition into an array of equally sized structure pixels, wherein the size A of the light and dark portions is an integer multiple of a size B of the structure pixels. The array of structure pixels comprises at least two different types of structure pixels. Each type of structure pixel defines a certain surface structure on the rubber article, the surface structure causing a certain optical reflectivity of the structure pixel. Further, at least two types of structure pixels have a different optical reflectivity.

## Claims

1.  Rubber article (140) comprising a digital code pattern (142), the digital code pattern (142) being a QR code pattern, said QR code pattern comprising:

    an array of structure pixels (128, 130, 228, 230, 328, 428, 528);
    the array of structure pixels (128, 130, 228, 230, 328, 428, 528) comprising a number r of different types of structure pixels (128, 130, 228, 230, 328, 428, 528), wherein r is a natural number greater or equal two, $r \geq 2$;

each type of structure pixel defining a certain surface structure (134, 434) on the rubber article (140), the surface structure (134, 434) causing a certain optical reflectivity of the structure pixel (128, 130, 228, 230, 328, 428, 528);

wherein of the r different types of structure pixels a first type of structure pixel (128, 228, 328, 428, 528) has a first optical reflectivity and a second type of structure pixel (130, 230) has a second optical reflectivity which is higher than the first optical reflectivity;

wherein said r different types of structure pixels comprise a structure pixel type of which each structure pixel (228, 328) has exactly two structure elements, and wherein the two structure elements are crossing grooves or crossing ridges.

2. The rubber article (140) according to claim 1, wherein said r different types of structure pixels further comprise a type of structure pixel (128, 130, 228, 230, 328, 428, 528) with a surface structure (134, 434) that is symmetrically distributed over the structure pixel.

3. Method of providing a rubber article (140) with a digital QR code pattern (142), the method comprising:

generating in the rubber article (140) said digital QR code pattern using an array of structure pixels (128, 130, 228, 230, 328, 428, 528);

the array of structure pixels comprising a number r of different types of structure pixels, wherein r is a natural number greater or equal two, $r \geq 2$, the number r of different types of structure pixels comprising a first type of structure pixel and a second type of structure pixel;

each type of structure pixel defining a certain surface structure (134, 434) on the rubber article (140), the surface structure (134, 434) causing a certain optical reflectivity of the structure pixel (128, 130, 228, 230, 328, 428, 528);

wherein the first type of structure pixel (128, 228, 328, 428, 528) has a first optical reflectivity and a second type of structure pixel (130, 230) has a second optical reflectivity which is higher than the first optical reflectivity;

wherein of one type of the different types of structure pixels each structure pixel (228, 328) has exactly two structure elements, and wherein the two structure elements are crossing grooves or crossing ridges.

4. Method according to claim 3, the method further comprising:
generating the digital code pattern (142) by irradiating a cured polymer material of the rubber article (140) by a laser beam.

5. Marking device (100) for generating a digital QR code pattern (142), the marking device comprising:

a marking tool (116); and
a controller (103) configured for controlling the marking tool in accordance with the method according to any one of claims 3 or 4.

6. Computer program product in the form of a computer program or in the form of a computer readable medium comprising the computer program, the computer program being configured for, when being executed on a data processor device, performing the method according to any one of claims 3 or 4.

**Patentansprüche**

1. Gummiartikel (140) aufweisend ein digitales Codemuster (142), wobei das digitale Codemuster (142) ein QR-Codemuster ist, das digitale Codemuster aufweisend:

ein Array von Strukturpixeln (128, 130, 228, 230, 328, 428, 528);

das Array von Strukturpixeln (128, 130, 228, 230, 328, 428, 528) aufweisend eine Anzahl r von verschiedenen Typen von Strukturpixeln (128, 130, 228, 230, 328, 428, 528), wobei r eine natürliche Zahl größer oder gleich zwei ist, $r \geq 2$;

wobei jeder Typ von Strukturpixeln eine bestimmte Oberflächenstruktur (134, 434) auf dem Gummiartikel (140) definiert, wobei die Oberflächenstruktur (134, 434) eine bestimmte optische Reflektivität des Strukturpixels (128, 130, 228, 230, 328, 428, 528) bewirkt;

wobei von den r verschiedenen Typen von Strukturpixeln ein erster Typ von Strukturpixeln (128, 228, 328, 428, 528) eine erste optische Reflektivität aufweist und ein zweiter Typ von Strukturpixeln (130, 230) eine zweite optische Reflektivität aufweist, welche höher ist als die erste optische Reflektivität;

wobei die r verschiedenen Typen von Strukturpixeln einen Strukturpixeltyp aufweisen, von welchem jedes Strukturpixel (228, 328) exakt zwei Strukturelemente aufweist, und wobei die zwei Strukturelemente sich kreuzende Nuten oder kreuzende Rippen sind.

2. Der Gummiartikel (140) gemäß Anspruch 1, wobei die r verschiedenen Typen von Strukturpixeln ferner einen Typ von Strukturpixel (128, 130, 228, 230, 328, 428, 528) aufweisen mit einer Oberflächenstruktur (134, 434), die symmetrisch über das Strukturpixel verteilt ist.

3. Verfahren des Ausstattens eines Gummiartikels (140) mit einem digitalen QR-Codemuster (142), das Verfahren aufweisend:

Erzeugen in dem Gummiartikel (140) das digitale QR-Codemuster unter Verwendung eines Arrays von Strukturpixeln (128, 130, 228, 230, 328, 428, 528);
wobei das Array von Strukturpixeln ferner eine Anzahl r von verschiedenen Typen von Strukturpixeln aufweist, wobei r eine natürliche Zahl größer oder gleich zwei ist, r ≥ 2, die Anzahl r von verschiedenen Typen von Strukturpixeln aufweisend einen ersten Typ von Strukturpixel und einen zweiten Typ von Strukturpixel;
wobei jeder Typ von Strukturpixel eine bestimmte Oberflächenstruktur (134, 434) auf dem Gummiartikel (140) definiert, wobei die Oberflächenstruktur (134, 434) eine bestimmte optische Reflektivität des Strukturpixels (128, 130, 228, 230, 328, 428, 528) bewirkt;
wobei der erste Typ von Strukturpixel (128, 228, 328, 428, 528) eine erste optische Reflektivität aufweist und ein zweiter Strukturpixel (130, 230) eine zweite optische Reflektivität aufweist, die höher ist als die erste optische Reflektivität;
wobei von einem Typ von den verschiedenen Typen von Strukturpixeln jedes Strukturpixel (228, 328) exakt zwei Strukturelemente aufweist, und wobei die zwei Strukturelemente sich kreuzende Nuten oder kreuzende Rippen sind.

4. Verfahren gemäß Anspruch 3, das Verfahren ferner aufweisend:
Erzeugen des digitalen Codemusters (142) durch Bestrahlen eines vulkanisierten Polymermaterials des Gummiartikels (140) durch einen Laserstrahl.

5. Markiervorrichtung (100) zum Erzeugen eines digitalen QR-Codemusters (142), die Markiervorrichtung aufweisend:

ein Markierungswerkzeug (116); und
eine Steuerung (103), welche konfiguriert ist zum Steuern des Markierungswerkzeugs gemäß dem Verfahren gemäß irgendeinem der Ansprüche 3 oder 4.

6. Computerprogrammprodukt in der Form eines Computerprogramms oder in der Form eines computerlesbaren Mediums, welches das Computerprogramm aufweist, wobei das Computerprogramm konfiguriert ist, um, wenn es auf einer Datenprozessorvorrichtung ausgeführt wird, das Verfahren gemäß irgendeinem der Ansprüche 3 oder 4 auszuführen,

**Revendications**

1. Article en caoutchouc (140) comprenant un motif de code numérique (142), le motif de code numérique (142) étant un motif de code QR, ledit motif de code QR comprenant :

un réseau de pixels de structure (128, 130, 228, 230, 328, 428, 528) ;
le réseau de pixels de structure (128, 130, 228, 230, 328, 428, 528) comprenant un nombre r de différents types de pixels de structure (128, 130, 228, 230, 328, 428, 528), dans lequel r est un nombre naturel supérieur ou égal à deux, r ≥ 2 ;
chaque type de pixel de structure définissant une certaine structure de surface (134, 434) sur l'article en caoutchouc (140), la structure de surface (134, 434) causant une certaine réflectivité optique du pixel de structure (128, 130, 228, 230, 328, 428, 528) ;
dans lequel, parmi les r différents types de pixels de structure, un premier type de pixel de structure (128, 228, 328, 428, 528) a une première réflectivité optique et un second type de pixel de structure (130, 230) a une seconde réflectivité optique qui est plus grande que la première réflectivité optique ;
dans lequel lesdits r différents types de pixels de structure comprennent un type de pixel de structure dont chaque pixel de structure (228, 328) a exactement deux éléments de structure, et dans lequel les deux éléments de structure sont des gorges se croisant ou des nervures se croisant.

2. Article en caoutchouc (140) selon la revendication 1, dans lequel lesdits r différents types de pixels de structure comprennent en outre un type de pixel de structure (128, 130, 228, 230, 328, 428, 528) avec une structure de surface (134, 434) qui est distribuée symétriquement sur le pixel de structure.

3. Procédé de fourniture d'un article en caoutchouc (140) avec un motif de code QR numérique (142), le procédé comprenant :

la génération dans l'article en caoutchouc (140) dudit motif de code QR numérique à l'aide d'un réseau de pixels de structure (128, 130, 228, 230, 328, 428, 528) ;
le réseau de pixels de structure comprenant un nombre r de différents types de pixels de structure, dans lequel r est un nombre naturel supérieur ou égal à deux, r ≥ 2, le nombre r de différents types de pixels de structure comprenant un premier type de pixel de structure et un second type de pixel de structure ;
chaque type de pixel de structure définissant une certaine structure de surface (134, 434) sur l'article en caoutchouc (140), la structure de surface (134, 434) causant une certaine réflectivité optique du pixel de structure (128, 130, 228, 230, 328, 428, 528) ;

dans lequel le premier type de pixel de structure (128, 228, 328, 428, 528) a une première réflectivité optique et un second type de pixel de structure (130, 230) a une seconde réflectivité optique qui est plus grande que la première réflectivité optique ;

dans lequel, parmi un type des différents types de pixels de structure, chaque pixel de structure (228, 328) a exactement deux éléments de structure, et dans lequel les deux éléments de structure sont des gorges se croisant ou des nervures se croisant.

4. Procédé selon la revendication 3, le procédé comprenant en outre :
la génération du motif de code numérique (142) par irradiation d'un matériau polymère vulcanisé de l'article en caoutchouc (140) par un faisceau laser.

5. Dispositif de marquage (100) pour générer un motif de code QR numérique (142), le dispositif de marquage comprenant :

un outil de marquage (116) ; et
un dispositif de commande (103) configuré pour commander l'outil de marquage selon le procédé selon l'une quelconque des revendications 3 ou 4.

6. Produit-programme d'ordinateur sous la forme d'un programme d'ordinateur ou sous la forme d'un support lisible par ordinateur comprenant, le programme d'ordinateur, le programme d'ordinateur étant configuré pour, lorsqu'il est exécuté sur un dispositif de traitement de données, réaliser le procédé selon l'une quelconque des revendications 3 ou 4.

Fig. 1

Fig. 2

Fig. 3

Fig. 4

Fig. 5

Fig. 6

Fig. 7

Fig. 8

Fig. 9

Fig. 10

Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1063071 A2
- US 20090218019 A1
- US 20120227879 A1
- WO 2005000714 A1
- WO 2009064580 A1
- NL 1006979 C2
- GB 2307762 A
- EP 14154445 A